# EUROPÄISCHE PATENTSCHRIFT

(11) **EP 2 381 119 B1**
(45) Veröffentlichungstag und Bekanntmachung des Hinweises auf die Patenterteilung: **26.09.2012**
(21) Anmeldenummer: 10004232.4
(22) Anmeldetag: 21.04.2010
(51) Int. Cl.: F16C 33/80, F16J 15/44, H02K 5/136, H02K 5/173

(54) **Wälzlageranordnung mit geradlinigem Explosionsspalt**
Roller bearing configuration with staight explosion gap
Agencement de palier à roulement avec une fente d'explosion droite

(43) Veröffentlichungstag der Anmeldung: 26.10.2011
(73) Patentinhaber: Aktiebolaget SKF, 415 50 Göteborg (SE)
(72) Erfinder: Hain, Steffen, 97553 Karlstadt (DE); Lange, Jörg, 28279 Bremen (DE); Liesegang, Hans-Jürgen, 26419 Schortens (DE); Plößl, Dieter, 97493 Bergrheinfeld (DE)
(74) Vertreter: Schonecke, Mitja

(56) Entgegenhaltungen:
- CH-A- 324 513
- DE-A1- 2 901 111
- DE-U1- 20 217 303
- GB-A- 2 199 905

## Beschreibung

Die Erfindung betrifft eine Wälzlageranordnung wie z.B. in DE 2 901 111 A1 beschrieben.

Aus dem Stand der Technik sind Wälzlageranordnungen zur explosionsgeschützten Durchführung von Wellen durch Gehäuse, insbesondere durch Gehäuse von Elektromotoren, bekannt. Der durch einen Explosionsschutzspalt erzeugte Explosionsschutz erlaubt den Betrieb solcher Elektromotoren in einem Umfeld, in dem explosionsgefährdete Gase auftreten können. Der Explosionsschutzspalt verhindert ein Zünden solcher Gase durch Funkenschlag im Bereich der Wälzlagerdurchführung.

Um einerseits eine Übertragung von Funken durch einen zu groß gewählten Explosionsschutzspalt zu verhindern und um andererseits eine Funkenbildung im Bereich des Explosionsschutzspalts durch ein Anlaufen der Wände des Explosionsschutzspalts zu verhindern, müssen die den Explosionsschutzspalt bildenden Bauteile mit einer besonders geringen Toleranz gefertigt werden. Es hat sich gezeigt, dass selbst dann, wenn die Weite des Explosionsschutzspalts nach der Herstellung eines explosionsgeschützten Motors kontrolliert wird, während des Transports oder Montage des Elektromotors Deformationen auftreten können, die zu einem Anlaufen bzw. Schleifen der Wände des Explosionsschutzspalts führen können. Ferner ist es bekannt, Explosionsschutzspalte in einer verwinkelten Form in der Art einer Lamellendichtung auszubilden. In dieser Ausgestaltung sind zur korrekten Dimensionierung von Explosionsschutzspalten nicht nur die Toleranzen in radialer Richtung, sondern auch die Toleranzen in axialer Richtung präzise zu kontrollieren.

Der Erfindung liegt insbesondere die Aufgabe zugrunde, eine Wälzlageranordnung mit einem in seiner Weite präzise eingestellten Explosionsschutzspalt bereitzustellen, die einfach und kostengünstig herstellbar ist und unempfindlich gegenüber Toleranzen anderer Bauteile ist.

Die Aufgabe wird insbesondere durch eine Wälzlageranordnung nach dem Anspruch 1 gelöst.

Die Erfindung geht insbesondere aus von einer Wälzlageranordnung mit wenigstens einem Außenring mit einer Laufbahn, der außenseitig von einem Außenteil umschlossen ist, und wenigstens einem Innenring mit einer Laufbahn, der ein Innenteil umschließt. Dabei sitzt das Innenteil auf einer Welle und das Innenteil und das Außenteil überragen den Innenring und den Außenring in einer axialen Richtung. Zwischen dem Innenteil und dem Außenteil ist ein Explosionsschutzspalt ausgebildet.

Es wird insbesondere vorgeschlagen, dass der Explosionsschutzspalt zumindest im Wesentlichen geradlinig und zylindrisch ist. Die Wälzlageranordnung mit dem ein- oder mehrreihigen Wälzlager, dem Innenring und dem Außenring kann so als vormontierte Baugruppe mit einem in seiner Weite vorgegebenen Explosionsschutzspalt bereitgestellt werden. Im Vergleich zu explosionsgeschützten Wellendurchführungen, in denen eine Wand des Explosionsschutzspalts von der Welle selbst gebildet wird, können Einflüsse von Toleranzen dieser Welle ausgeschlossen werden. Im Vergleich zu labyrinthartigen Explosionsschutzspalten können die Herstellungskosten bei gleicher Präzision deutlich reduziert werden. Ein (Nach)Schmieren der Lagereinheit kann trotz effektivem Explosionsschutz und ohne ein Öffnen des Explosionsschutzspalts ermöglicht werden, wenn das Innenteil und/oder das Außenteil zumindest eine Bohrung zum Zuführen und/oder Abführen von Schmiermittel aufweisen.

Ferner wird vorgeschlagen, die Wälzlageranordnung mit zumindest einer mit dem Außenteil verbundenen Fettpatrone zum Zuführen von Schmiermittel auszustatten. Alternativ dazu kann die Fettpatrone mit dem Innenteil verbunden werden. Wenn die Wälzlageranordnung einen Mechanismus, insbesondere einen Keilmechanismus zum Einstellen einer Weite des Explosionsschutzspalts umfasst, kann diese präzise auf einen Sollwert justiert werden.

Ferner wird vorgeschlagen, einen deformationssensitiven Bereich des Innenteils in einem Schiebesitz auf die Lagerwelle zu setzen, während ein weniger deformationssensitiver Bereich in einem Presssitz auf die Lagerwelle gesteckt wird. Ein Einfluss der Toleranz der Welle kann insbesondere ausgeschlossen werden, wenn das Innenteil in dem axialen Bereich des Explosionsschutzspalts nicht in einem Presssitz, sondern mit einer Spielpassung auf der Lagerwelle sitzt.

Im Falle eines Lagerschadens oder bei sonstigen Problemen kann durch den Explosionsschutzspalt ein Notlauf ohne die Gefahr von Funkenbildung ermöglicht werden, wenn zumindest eine Wand des Explosionsschutzspalts aus Bronze, Messing oder einem anderen Buntmetall ausgebildet ist.

Der Explosionsschutz kann weiter verbessert werden und der Eintritt von Schmutz in das Wälzlager oder der Austritt von Schmiermittel kann vermieden werden, wenn die Wälzlageranordnung wenigstens ein Dichtungselement im Bereich des Explosionsschutzspalts umfasst. Die Wälzlageranordnung kann vorteilhaft als Loslager verwendet werden, wenn das Innenteil an seiner Innenseite und/oder das Außenteil an einer Außenseite eine Gleitbeschichtung aufweist.

Weitere Merkmale und Vorteile der Erfindung ergeben sich aus der folgenden Figurenbeschreibung, die Ausführungsbeispiele der Erfindung betrifft. Die Zeichnung, die Figurenbeschreibung und die Ansprüche enthalten zahlreiche Merkmale in speziellen Kombinationen. Der Fachmann wird die Merkmale auch einzeln und in weiteren Kombinationen betrachten, um den Erfindungsgedanken in speziellen Anwendungsbereichen nutzbar zu machen.

Es zeigen:
- Figur 1: eine Wälzlageranordnung mit einem zweireihigen Kugellager, einem Innenteil und einem Außenteil in einer ersten Ausgestaltung der Erfindung;
- Figur 2: eine Wälzlageranordnung mit einem Explosionsschutzspalt nach einer weiteren Ausgestaltung der Erfindung mit einem voreingestellten Explosionsschutzspalt und
- Figur 3: eine Wälzlageranordnung nach einer weiteren Ausgestaltung der Erfindung mit einem Mechanismus zum Einstellen eines Explosionsschutzspalts.

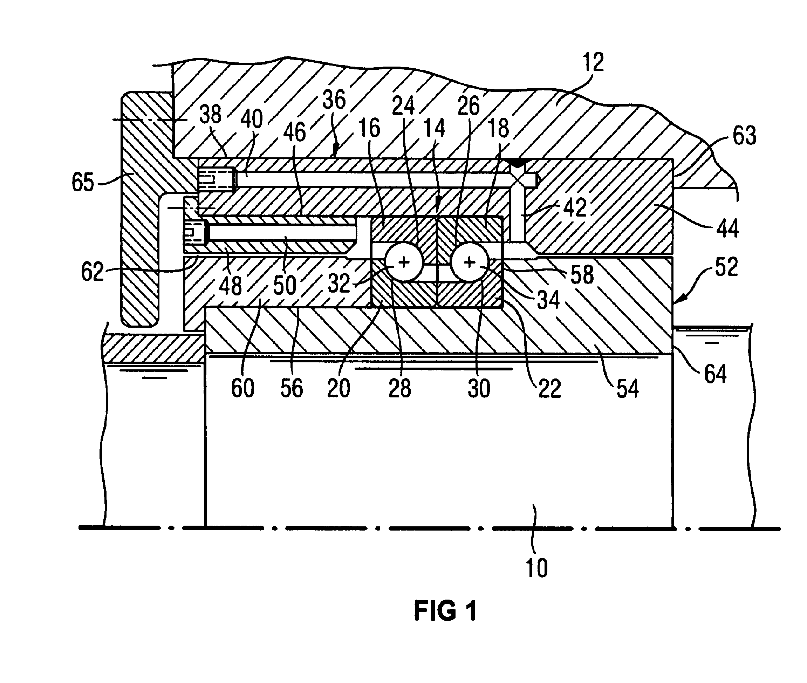

Figur 1 zeigt eine Wälzlageranordnung zur Durchführung einer Welle 10 durch ein explosionsgeschütztes Gehäuse 12 eines Elektromotors. Die Wälzlageranordnung umfasst ein zweireihiges Kugellager 14 in einer O-Anordnung mit zwei Außenringen 16, 18 und zwei Innenringen 20, 22. Die Außenringe 16, 18 umfassen jeweils eine Außenlaufbahn 24, 26 und die Innenringe 20, 22 umfassen jeweils eine Innenlaufbahn 28, 30. In den Laufbahnen 24, 26, 28, 30 laufen zwei Kugelreihen 32, 34.

Die Außenringe 16, 18 sind umfänglich von einem Außenteil 36 umgeben, das an seiner radialen Außenseite 38 mit einer Gleitbeschichtung ausgestattet ist und in eine entsprechende Öffnung im Gehäuse 12 des Motors eingesetzt ist. Durch zwei Bohrungen 40, 42 kann Schmiermittel aus dem Kugellager 14 aus- bzw. eintreten. Das Außenteil 36 umfasst einen Hauptkörper 44 mit einer zylindrischen Bohrung 46, in welche das Kugellager 14 eingesetzt ist. In die Bohrung 46 ist eine Verschlusshülse 48 des Außenteils 36 eingesetzt, in die eine Fettzu- bzw. abfuhrbohrung 50 eingearbeitet ist. Die Bohrung 40 und die Fettzufuhrbohrung 50 können während des Betriebs mit Verschlussschrauben abgedichtet werden oder die Fettzufuhrbohrung 50 kann mit einer Fettpatrone (nicht dargestellt) verbunden werden bzw. integriert sein.

Die Innenringe 20, 22 des Kugellagers 14 sind auf ein hülsenförmiges Innenteil 52 aufgesteckt, das seinerseits auf die Welle 10 aufgesteckt ist. Das Innenteil 52 umfasst einen Hauptkörper 54 mit einem zylindrischen Außenmantel 56, auf welchen die Innenringe 20, 22 des Kugellagers 14 aufgesteckt sind und einem Absatz 58, an welchem der Innenring 22 des Kugellagers 14 anliegt. Eine Spannhülse 60 des Innenteils 52 verspannt die Innenringe 20, 22 mit dem Absatz 58. Die zylindermantelförmige radiale Außenseite der Spannhülse 60 und die zylindermantelförmige radiale Innenseite der Verschlusshülse 48 sind einander zugewandt und schließen einen Explosionsschutzspalt 62 mit einer Weite von ca. 0,1 mm ein.

Die Wälzlageranordnung liegt axial an einem Absatz 64 des Gehäuses 12 an und wird von einem Verschlussdeckel 65, der mit dem Gehäuse 12 verschraubt ist, gegen den Absatz 64 gepresst.

Der Explosionsschutzspalt 62, der von der Verschlusshülse 48 des Außenteils 36 und der Spannhülse 60 des Innenteils 52 gebildet ist, verläuft in einer axialen Richtung der Wälzlageranordnung geradlinig und ist zylindrisch. Das Innenteil 52 bzw. der Hauptkörper 54 des Innenteils 52 ist in einem Presssitz oder einer Übergangspassung auf die Welle 10 aufgesetzt. Der Hauptkörper 54 des Innenteils 52 liegt an einem Absatz 64 der Welle 10 an. In einer denkbaren Ausgestaltung der Erfindung kann im Bereich des Explosionsschutzspalts 62 ein Dichtungselement angeordnet sein.

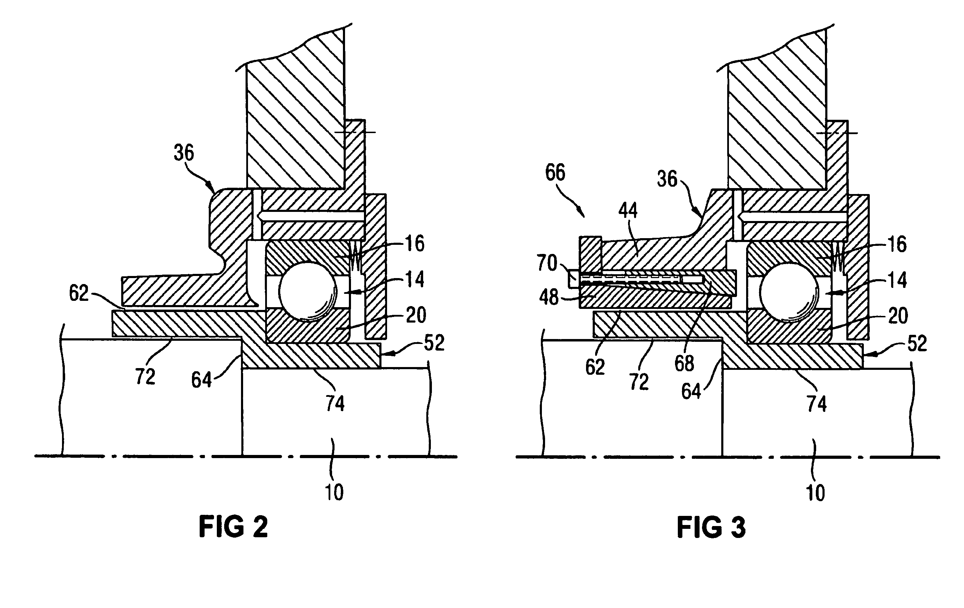

Die Figuren 2 und 3 zeigen weitere Ausgestaltung der Erfindung. Um Wiederholungen zu vermeiden, beschränkt sich die folgende Beschreibung im Wesentlichen auf Unterschiede zu dem in Figur 1 dargestellten Ausführungsbeispiel, wobei im Hinblick auf gleichbleibende Merkmale auf die Beschreibung zur Figur 1 verwiesen wird. Ähnliche Merkmale sind mit gleichen Bezugszeichen versehen.

Figur 2 zeigt eine alternative Ausgestaltung der Erfindung mit einem einreihigen Kugellager 14 und einem Innenteil 52, das mit einer Übergangspassung bzw. einem Presssitz 74 auf einer Welle 10 montiert ist. Zwischen einem von einem Innenring 20 des Wälzlagers 14 umgebenen Innenteil 52 und einem einen Außenring 16 des Wälzlagers 14 umgebenen Außenteil 36 ist ein Explosionsschutzspalt 62 gebildet, dessen Weite voreingestellt ist. Das Innenteil 52 liegt an einem Absatz 64 der Welle 10 an. Der größere Teil des Explosionsschutzspalts 62 liegt von dem Kugellager 14 aus betrachtet hinter dem Absatz 64. Hinter dem Absatz 64 ist das Innenteil 52 in einem lockeren Schiebesitz 72 auf die Welle 10 aufgesetzt, so dass sich das Innenteil 52 in diesem Bereich nicht durch eine fehlerhafte Passung auf der Welle 10 deformieren kann. Dadurch kann eine Verengung des Explosionsschutzspalts 62 durch Toleranzen der Welle 10 vermieden werden. Es sind weitere Ausgestaltungen der Erfindung denkbar, in welchen der Innenring 20 des Kugellagers 14 einstückig mit dem Innenteil 52 ausgebildet ist.

Figur 3 zeigt eine weitere Ausgestaltung der Erfindung mit einem Mechanismus 66 zum Einstellen einer Weite des Explosionsschutzspalts 62. Das Außenteil 36 umfasst einen Hauptkörper 44 und eine Verschlusshülse 48, deren radiale Außenseite sich konisch in Richtung des Kugellagers 14 verjüngt. Zwischen dem Hauptkörper 44 und der Verschlusshülse 48 ist ein sich entsprechend der konischen Außenseite der Verschlusshülse 48 an seiner radialen Innenseite konisch verjüngender Ring 68 angeordnet, dessen axiale Position über Schrauben 70 eingestellt werden kann. Durch eine Variation der axialen Position des Rings 68 kann der Durchmesser der Verschlusshülse 48 und damit die Weite des Explosionsschutzspalts 62 variiert werden. Die Verschlusshülse 48 kann einen oder mehrere über ihren Umfang verteilte, axial verlaufende Spalten aufweisen, die eine solche Variation des Durchmessers ermöglichen.

In allen Ausgestaltungen der Erfindung kann eine Wand oder beide Wände des Explosionsschutzspalts 62 aus Buntmetall wie Messing oder Kupfer ausgebildet sein. Dadurch kann auch im Fall eines Lagerschadens ein Notlauf ermöglicht werden und eine Funkenbildung kann vermieden werden.

### Bezugszeichenliste

- 10: Welle
- 12: Gehäuse
- 14: Kugellager
- 16, 18: Außenring

- 20,22: Innenring
- 24,26: Außenlaufbahn
- 28,30: Innenlaufbahn

- 32, 34: Kugelreihe
- 36: Außenteil
- 38: Außenseite

- 40,42: Bohrung
- 44: Hauptkörper
- 46: Bohrung
- 48: Verschlusshülse

- 50: Fettzufuhrbohrung
- 52: Innenteil
- 54: Hauptkörper
- 56: Oberfläche
- 58: Absatz

- 60: Spannhülse
- 62: Explosionsschutzspalt
- 64: Absatz
- 66: Mechanismus
- 68: Ring

- 70: Schraube
- 72: Presssitz
- 74: Schiebesitz

## Patentansprüche

1. Wälzlageranordnung mit wenigstens einem Außenring (16, 18) mit einer Außenlaufbahn (24, 26), der außenseitig von einem radial zwischen dem Außenring (16, 18) und einem Gehäuse angeordneten Außenteil (36) umschlossen ist, und wenigstens einer Innenlaufbahn (28, 30), die ein Innenteil (52) umschließt, wobei das Innenteil (52) auf einer Welle (10) sitzt und wobei das Innenteil (52) und das Außenteil (36) die Innenlaufbahn (28, 30) und den Außenring (16, 18) axial überragen, so dass zwischen dem Innenteil (52) und dem Außenteil (36) ein Explosionsschutzspalt (62) ausgebildet ist, der
zumindest im Wesentlichen geradlinig und zylindrisch ist.

2. Wälzlageranordnung nach einem der vorhergehenden Ansprüche, **dadurch gekennzeichnet, dass** das Innenteil (52) und/oder das Außenteil (36) zumindest eine Bohrung (40, 42, 50) zum Zuführen und/oder Abführen von Schmiermittel aufweisen.

3. Wälzlageranordnung nach Anspruch 2, **gekennzeichnet durch** zumindest eine mit dem Außenteil (36) verbindbare Fettpatrone zum Zuführen von Schmiermittel.

4. Wälzlagerandordnung nach einem der vorhergehenden Ansprüche, **gekennzeichnet durch** einen Mechanismus (66) zum Einstellen einer Weite des Explosionsschutzspalts (62).

5. Wälzlageranordnung nach einem der vorhergehenden Ansprüche, **dadurch gekennzeichnet, dass** das Innenteil (52) im Bereich der Innenlaufbahn (28, 30) in einem Presssitz auf der Welle (10) befestigt ist.

6. Wälzlageranordnung nach Anspruch 4, **dadurch gekennzeichnet, dass** das Innenteil (52) zumindest in einem mit dem Explosionsschutzspalt (62) überlappendem Bereich in einem Schiebesitz auf der Welle (10) sitzt.

7. Wälzlageranordnung nach einem der vorhergehenden Ansprüche, **dadurch gekennzeichnet, dass** das Innenteil (52) und/oder das Außenteil (36) zumindest im Bereich des Explosionsschutzspalts (62) wenigstens teilweise aus einem Buntmetall, Bronze oder Messing ausgebildet sind.

8. Wälzlageranordnung nach einem der vorhergehenden Ansprüche, **gekennzeichnet durch** wenigstens ein Dichtungselement im Bereich des Explosionsschutzspalts (62).

9. Wälzlageranordnung nach einem der vorhergehenden Ansprüche, **dadurch gekennzeichnet, dass** das Innenteil (52) an seiner Innenseite und/oder das Außenteil (36) an seiner Außenseite eine Gleitbeschichtung aufweist.

## Claims

1. Roller bearing arrangement having at least one outer ring (16, 18) with an outer raceway (24, 26) which is enclosed on the outside by an outer part (36) which is arranged radially between the outer ring (16, 18) and a housing, and at least one inner raceway (28, 30) which encloses an inner part (52), wherein the inner part (52) is seated on a shaft (10), and wherein the inner part (52) and the outer part (36) project axially over the inner raceway (28, 30) and the outer ring (16, 18), with the result that an explosion protection gap (62) is formed between the inner part (52) and the outer part (36) and is at least substantially linear and cylindrical.

2. Roller bearing arrangement according to Claim 1, **characterized in that** the inner part (52) and/or the outer part (36) have at least one drilled hole (40, 42, 50) for feeding in and/or discharging lubricant.

3. Roller bearing arrangement according to Claim 2, **characterized by** at least one grease cartridge which can be connected to the outer part (36) and has the purpose of feeding in lubricant.

4. Roller bearing arrangement according to one of the preceding claims, **characterized by** a mechanism (66) for adjusting a width of the explosion protection gap (62).

5. Roller bearing arrangement according to one of the preceding claims, **characterized in that** the inner part (52) in the region of the inner raceway (28, 30) is attached with a form fit to the shaft (10).

6. Roller bearing arrangement according to Claim 4, **characterized in that** the inner part (52) is seated in a sliding seat on the shaft (10) at least in a region which overlaps with the explosion protection gap (62).

7. Roller bearing arrangement according to one of the preceding claims, **characterized in that** the inner part (52) and/or the outer part (36) are constructed at least partially from a brightly coloured metal, bronze or brass, at least in the region of the explosion protection gap (62).

8. Roller bearing arrangement according to one of the preceding claims, **characterized by** at least one sealing element in the region of the explosion protection gap (62).

9. Roller bearing arrangement according to one of the preceding claims, **characterized in that** the inner part (52) has a sliding coating on its inner side and/or the outer part (36) has a sliding coating on its outer side.

## Revendications

1. Agencement de palier à roulement comprenant au moins une bague extérieure (16, 18) avec une piste de roulement extérieure (24, 26), qui est entourée du côté extérieur par une partie extérieure (36) disposée radialement entre la bague extérieure (16, 18) et un boîtier, et au moins une piste de roulement intérieure (28, 30), qui entoure une partie intérieure (52), la partie intérieure (52) reposant sur un arbre (10), et la partie intérieure (52) et la partie extérieure (36) dépassant axialement de la piste de roulement intérieure (28, 30) et de la bague extérieure (16, 18), de sorte qu'entre la partie intérieure (52) et la partie extérieure (36) soit réalisée une fente de protection contre les explosions (62), qui est au moins essentiellement rectiligne et cylindrique.

2. Agencement de palier à roulement selon la revendication 1, **caractérisé en ce que** la partie intérieure (52) et/ou la partie extérieure (36) présentent au moins un alésage (40, 42, 50) pour fournir et/ou évacuer du lubrifiant.

3. Agencement de palier à roulement selon la revendication 2, **caractérisé par** au moins une cartouche de graisse pouvant être raccordée à la partie extérieure (36) pour fournir du lubrifiant.

4. Agencement de palier à roulement selon l'une quelconque des revendications précédentes, **caractérisé par** un mécanisme (66) pour ajuster une largeur de la fente de protection contre les explosions (62).

5. Agencement de palier à roulement selon l'une quelconque des revendications précédentes, **caractérisé en ce que** la partie intérieure (52) est fixée par ajustement serré sur l'arbre (10) dans la région de la piste de roulement intérieure (28, 30).

6. Agencement de palier à roulement selon la revendication 4, **caractérisé en ce que** la partie intérieure (52) repose par ajustement coulissant sur l'arbre (10) au moins dans une région chevauchant la fente de protection contre les explosions (62).

7. Agencement de palier à roulement selon l'une quelconque des revendications précédentes, **caractérisé en ce que** la partie intérieure (52) et/ou la partie extérieure (36) sont réalisées au moins dans la région de la fente de protection contre les explosions (62) au moins en partie en un métal lourd non ferreux, en bronze ou en laiton.

8. Agencement de palier à roulement selon l'une quelconque des revendications précédentes, **caractérisé par** au moins un élément d'étanchéité dans la région de la fente de protection contre les explosions (62).

9. Agencement de palier à roulement selon l'une quelconque des revendications précédentes, **caractérisé en ce que** la partie intérieure (52) présente, sur son côté intérieur, et/ou la partie extérieure (36) présente, sur son côté extérieur, un revêtement de glissement.
